(19) **Europäisches Patentamt European Patent Office Office européen des brevets**

(11) **EP 4 746 285 A1**

(12) **EUROPEAN PATENT APPLICATION**
published in accordance with Art. 153(4) EPC

(43) Date of publication:
   **20.05.2026 Bulletin 2026/21**

(21) Application number: **24839445.4**

(22) Date of filing: **19.06.2024**

(51) International Patent Classification (IPC):
   *H02P 25/03* (2016.01)

(52) Cooperative Patent Classification (CPC):
   **H02P 25/03**

(86) International application number:
   **PCT/JP2024/022184**

(87) International publication number:
   **WO 2025/013549 (16.01.2025 Gazette 2025/03)**

(84) Designated Contracting States:
   **AL AT BE BG CH CY CZ DE DK EE ES FI FR GB GR HR HU IE IS IT LI LT LU LV MC ME MK MT NL NO PL PT RO RS SE SI SK SM TR**
   Designated Extension States:
   **BA**
   Designated Validation States:
   **GE KH MA MD TN**

(30) Priority: **13.07.2023 JP 2023115389**

(71) Applicant: **DENSO CORPORATION**
   **Kariya-city, Aichi 448-8661 (JP)**

(72) Inventor: **SUZUKI, Takashi**
   **Kariya-city, Aichi 448-8661 (JP)**

(74) Representative: **Kuhnen & Wacker**
   **Patent- und Rechtsanwaltsbüro PartG mbB**
   **Prinz-Ludwig-Straße 40A**
   **85354 Freising (DE)**

(54) **ROTARY ELECTRIC MACHINE CONTROL DEVICE, AND PROGRAM**

(57)   A control unit (30) is applied to a system including: a rotary electric machine (40) that has a stator (50) including a stator winding (52) and a rotor (60) including a field winding (70); and an inverter (20). The rotary electric machine is configured such that when a high-frequency current flows through the stator winding, a voltage is induced in the field winding, and a field current flows through the field winding. The control unit includes: a switch control section (109) that performs switching control of the inverter such that a combined current of a high-frequency current and a fundamental current having a low frequency flows through the stator winding; an induced voltage calculation section (113, 122) that calculates an induced voltage generated in the stator winding when the switching control is performed and while the rotor rotates; and a field current calculation section (115, 119, 124) that calculates a field current flowing through the field winding based on the calculated induced voltage.

FIG.7

Processed by Luminess, 75001 PARIS (FR)

EP 4 746 285 A1

**Description**

[Cross Reference to Related Application]

The present application is based on Japanese Application No. 2023-115389 filed on July 13, 2023, the contents of which are incorporated herein by reference.

[Technical Field]

The present disclosure relates to a control unit for a rotary electric machine and a program thereof.

[Background Art]

There have been known a system including a rotary electric machine having a stator including a stator winding and an inverter electrically connected to the stator winding. The rotary electric machine has a rotor including a field winding. The system includes a field energizing circuit electrically connected to the field winding in order to allow a field current to flow through the field winding. Such a system is disclosed in, for example, PTL 1.

[Citation List]

[Patent Literature]

PTL 1: JP 2019-71733 A

[Summary of the Invention]

For example, a field current needs to be detected in order to protect a rotor from overheat or to determine generated magnetic flux of a rotor. For this purpose, the system includes a field current sensor that detects a current flowing through the field energizing circuit. However, such a configuration requires a brush for electrically connecting the field energizing circuit with the field winding. In view of simplifying the configuration of the system, the system preferably does not include a brush. In such a system, a technology to determine a field current is also desired.

A main object of the present disclosure is to provide a control unit for a rotary electric machine and a program in which a field current can be determined in a system without a brush.

The present disclosure is a control unit for a rotary electric machine applied to a system, the system including:

a rotary electric machine that has a stator including a stator winding and a rotor including a field winding; and
an inverter electrically connected to the stator winding, in which
the rotary electric machine is configured such that when a high-frequency current flows through the stator winding, a voltage is induced in the field winding, and a field current flows through the field winding, and
the control unit including:

a switch control section that performs switching control of the inverter such that a combined current of the high-frequency current and a fundamental current having a frequency lower than the high-frequency current flows through the stator winding,
an induced voltage calculation section that calculates an induced voltage generated in the stator winding when the switching control is performed by the switch control section and while the rotor rotates, and
a field current calculation section that calculates a field current flowing through the field winding based on the calculated induced voltage.

The rotary electric machine of the present disclosure is configured such that when a high-frequency current flows through the stator winding, a voltage is induced in the field winding, and a field current flows through the field winding. Further, the switch control section performs the switching control of the inverter such that in addition to a fundamental current intended to generate torque in the rotary electric machine, a high-frequency current having a frequency higher than the fundamental current flows through the stator winding. This allows a field current to flow through the field winding without including a field energizing circuit and a brush that electrically connects the field energizing circuit with the field winding.

Here, when the switching control by the switch control section is performed, the rotor rotates, and an induced voltage is generated in the stator winding. The induced voltage correlates with a magnetic flux linkage of the field winding, and the magnetic flux linkage of the field winding correlates with a field current.

In view of this point, the present disclosure includes: an induced voltage calculation section that calculates an induced voltage generated in the stator winding when switching control is performed by the switch control section and while the rotor rotates; and a field current calculation section that calculates a field current based on the calculated induced voltage. This allows a field current to be determined without including a field current sensor that detects a field current.

[Brief Description of the Drawings]

The above-described and other objects, features, and advantages of the present disclosure will become clearer from the following detailed description with reference to the accompanying drawings. The drawings are as follows:

Fig. 1 is an overall configuration diagram of a control system of a rotary electric machine according to a first embodiment;
Fig. 2 is a diagram showing an inverter and a peripheral configuration of the inverter;
Fig. 3 is a cross-sectional diagram of a rotor and a stator;
Fig. 4 is a diagram showing an electrical circuit included in a rotor;
Fig. 5 is a block diagram of torque control processing of a control unit;
Fig. 6 is a diagram showing a fundamental current and a high-frequency current (harmonic current);
Fig. 7 is a block diagram of field current calculation processing and fail-safe processing of a control unit;
Fig. 8 is a flowchart showing a procedure of field current calculation processing;
Fig. 9 is a flowchart showing a procedure of field current calculation processing according to a second embodiment;
Fig. 10 is a block diagram of field current calculation processing and fail-safe processing according to a third embodiment;
Fig. 11 is a flowchart showing a procedure of field current calculation processing;
Fig. 12 is a block diagram of field current calculation processing and fail-safe processing according to a fourth embodiment;
Fig. 13 is a block diagram of field current calculation processing and fail-safe processing according to a fifth embodiment;
Fig. 14 is a block diagram of gain adjustment processing according to a sixth embodiment;
Fig. 15 is a diagram showing a relationship between an amplitude of a d-axis high-frequency current and a gain;
Fig. 16 is a block diagram of gain adjustment processing according to a seventh embodiment;
Fig. 17 is a diagram showing a relationship between an amplitude of a fundamental current and a gain;
Fig. 18 is a diagram showing a change aspect of an amplitude of a d-axis high-frequency current according to an eighth embodiment; and
Fig. 19 is a diagram showing a change aspect of an amplitude of a d-axis high-frequency current according to a ninth embodiment.

[Description of the Embodiments]

A plurality of embodiments will be described with reference to the drawings. In the plurality of embodiments, parts that functionally and/or structurally correspond and/or relate to each other may be assigned identical referential signs or referential signs with different hundreds or higher places. For parts corresponding and/or relating to each other, descriptions of other embodiments can be referred to.

<First embodiment>

Hereinafter, a first embodiment embodying the rotary electric machine and the control unit for the rotary electric machine according to the present disclosure will be described with reference to the drawings. The rotary electric machine and the control unit constitute a control system of a rotary electric machine, and the control system is mounted on a vehicle. The rotary electric machine is a running power source of a vehicle.

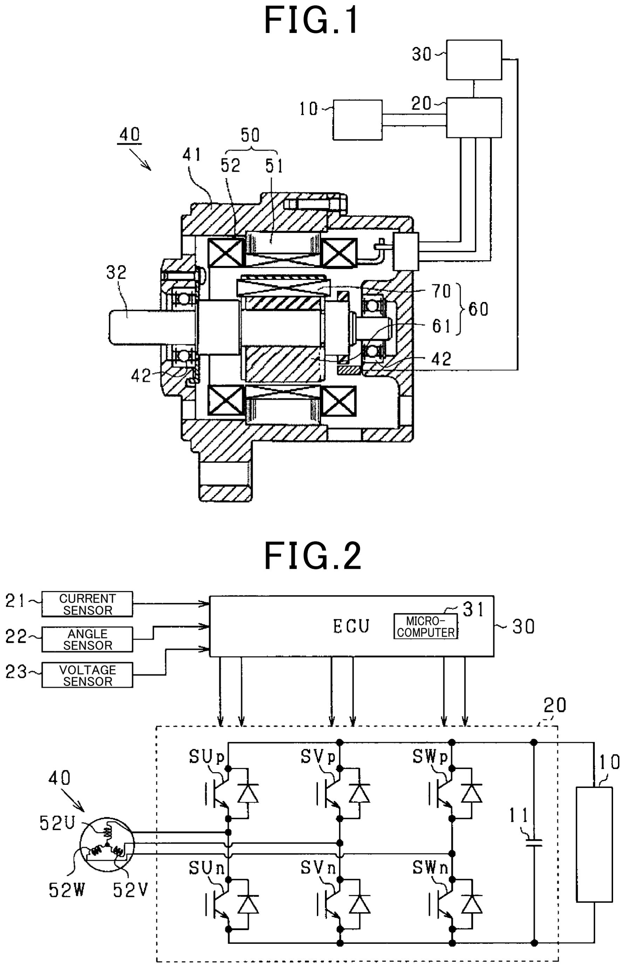

As shown in Fig. 1, the control system includes a DC power source 10, an inverter 20, a control unit 30, and a rotary electric machine 40. The rotary electric machine 40 is a self-excited field winding type synchronous machine. For example, a mechatronics drive system is configured by including the rotary electric machine 40, the inverter 20, and the control unit 30, or the rotary electric machine 40, the inverter 20, and the control unit 30 are separately configured as components.

The rotary electric machine 40 includes a housing 41 as well as a stator 50 and a rotor 60 housed in the housing 41. The rotary electric machine 40 of the present embodiment is an inner rotor type rotary electric machine in which the rotor 60 is disposed on the radial inside of the stator 50.

The stator 50 includes a stator core 51 and a stator winding 52. The stator winding 52 is formed with, for example, a copper wire and contains U,V,W-phase winding wires 52U, 52V, and 52W which are shifted to each other by an electrical angle of 120°.

The rotor 60 includes a rotor core 61 and a field winding 70. The field winding 70 is formed with, for example, an aluminum wire, a copper wire, or a carbon nanotube (CNT). A rotation shaft 32 is inserted into the center hole of the rotor core 61. The rotation shaft 32 is rotatably supported by the housing 41 via a bearing 42.

As shown in Fig. 2, the inverter 20 includes series-connected bodies between U,V,W-phase upper arm switches SUp, SVp, and SWp and U,V,W-phase lower arm switches SUn, SVn, and SWn. First ends of the U,V,W-phase winding wires 52U, 52V, and 52W are connected to connection points between the U,V,W-phase upper arm switches SUp, SVp, and SWp and the U,V,W-phase lower arm switches SUn, SVn, and SWn, respectively. Second ends of the U,V,W-phase winding wires 52U, 52V, and 52W are connected at a neutral point. That is, the U,V,W-phase winding wires 52U, 52V, and 52W are star-connected in the present embodiment. Note that in the present embodiment, the switches SUp to SWn are each an IGBT. A freewheeling diode is antiparallel-connected to each of the switches SUp to SWn.

The positive terminal of the DC power source 10 is connected to collectors of the U,V,W-phase upper arm switches SUp, SVp, and SWp. The negative terminal of the DC power source 10 is connected to emitters of the U,V,W-phase lower arm switches SUn, SVn, and SWn. Note that a smoothing capacitor 11 is parallel-connected to the DC power source 10.

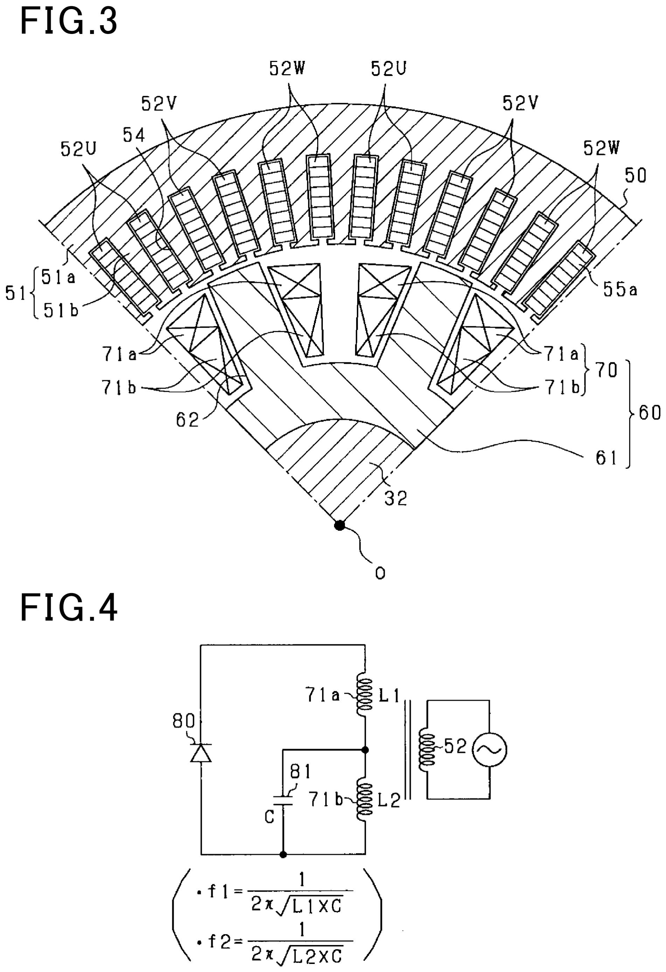

Next, the stator 50 and the rotor 60 will be described using Fig. 3.

Both the stator 50 and the rotor 60 as well as the rotation shaft 32 are disposed coaxially (specifically, on a rotation center axis O). In the following description, a direction in which the rotation shaft 32 extends is defined as an axial direction, a direction radially extending from the center of the rotation shaft 32 is defined as a radial direction, and a direction extending circumferentially around the rotation shaft 32 is defined as a circumferential direction.

The stator 50 is constituted by a laminated steel plate made of a soft magnetic material and has an annular back yoke 51a and a plurality of teeth 51b projecting from the back yoke 51a toward the radial inside. Circumferentially aligned multiple slots 54 are each formed between the neighboring teeth 51b. The phase winding wires are housed in the slots 54 in a predetermined order to constitute the stator winding 52.

The rotor 60 is made of a soft magnetic material and constituted by, for example, a laminated steel plate. The rotor 60 has a cylindrical rotor core 61 and a plurality of main pole portions 62 projecting from the rotor core 61 toward the radial outside. In the present embodiment, eight main pole portions 62 are circumferentially disposed at even intervals.

The field winding 70 includes a first winding portion 71a and a second winding portion 71b. In each of the main pole portions 62, the first winding portion 71a is wound on the radial outside, and the second winding portion 71b is wound on the radial inside than the first winding portion 71a. In each of the main pole portions 62, the winding direction of the first winding portion 71a is the same as the winding direction of the second winding portion 71b. Further, in the circumferentially neighboring main pole portions 62, the winding direction of the winding portions 71a and 71b wound on one hand is opposite to the winding direction of the winding portions 71a and 71b wound on the other hand. Therefore, the magnetization directions of the circumferentially neighboring main pole portions 62 are opposite to each other.

Fig. 4 shows an electrical circuit on the rotor 60 side including the winding portions 71a and 71b wound around the common main pole portion 62. The first winding portion 71a shown in Fig. 4 is a series-connected body of the first winding portion 71a wound around each of the main pole portions 62, and the second winding portion 71b shown in Fig. 4 is a series-connected body of the second winding portion 71b wound around each of the main pole portions 62.

To the rotor 60, a diode 80 as a rectifier element and a capacitor 81 are disposed. The diode 80 is electrically parallel-connected to the series-connected body of the first winding portion 71a and the second winding portion 71b. Particularly, a first end of the first winding portion 71a is connected to the cathode of the diode 80, and a first end of the second winding portion 71b is connected to a second end of the first winding portion 71a. The anode of the diode 80 is connected to a second end of the second winding portion 71b. The capacitor 81 is electrically parallel-connected to the second winding portion 71b. In Fig. 4, L1 indicates the inductance of the first winding portion 71a, L2 indicates the inductance of the second winding portion 71b, and C indicates the capacitance of the capacitor 81.

In the present embodiment, a serial resonance circuit including the first winding portion 71a and the capacitor 81 is constituted, and a parallel resonance circuit including the second winding portion 71b and the capacitor 81 is constituted. In Fig. 4, f1 indicates a first resonance frequency that is the resonance frequency of the serial resonance circuit, and f2 indicates a second resonance frequency that is the resonance frequency of the parallel resonance circuit.

Note that the anode of the diode 80 may be connected to the first end of the first winding portion 71a, and the cathode of the diode 80 may be connected to the second end of the second winding portion 71b.

Returning to the description of Fig. 2, the control system includes a current sensor 21, an angle sensor 22, and a voltage sensor 23. The current sensor 21 detects at least two phase currents among the phase currents flowing through the rotary electric machine 40. The angle sensor 22 detects the rotation angle (electrical angle) of the rotor 60. In the present embodiment, the voltage sensor 23 includes a sensor that detects the voltage of the DC power source 10 and a sensor that detects the output voltage (phase voltage) of each phase of the inverter 20. The detected values of the sensors 21 to 23 are input to the control unit 30.

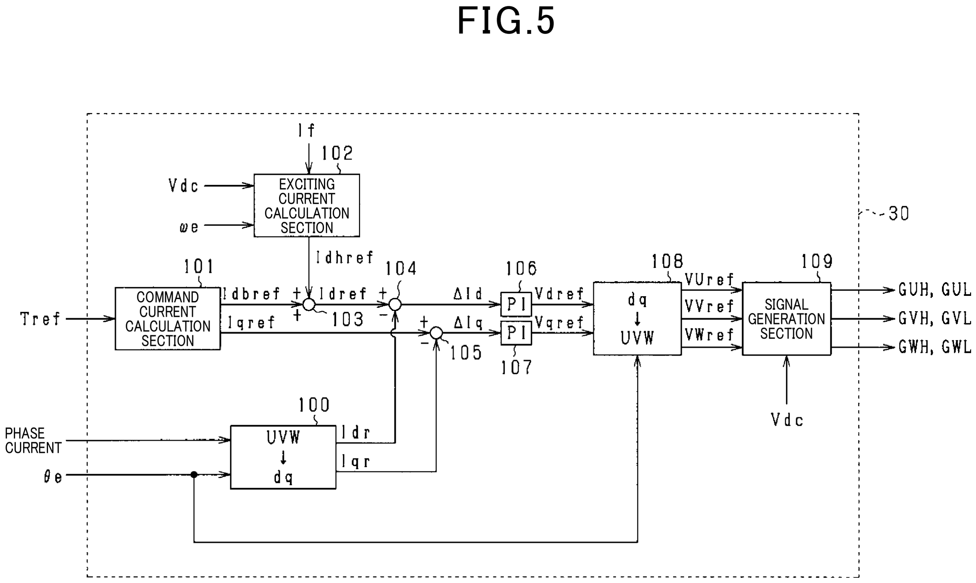

The control unit 30 is an electronic control unit mainly constituted by a microcomputer 31. The microcomputer 31 includes a central processing unit (CPU). A function provided by the microcomputer 31 can be provided by a software recorded in a substantial memory unit and a computer to execute the software, only software, only hardware, or a combination thereof. For example, when the microcomputer 31 is provided by an electronic circuit as hardware, it can be provided by a digital circuit including multiple logic circuits, or an analog circuit. For example, the microcomputer 31 executes a program stored in a non-transitory tangible storage medium which the microcomputer 31 itself includes as a storage. Examples of the program include programs of processing shown in Figs. 5, 7, 8, and the like described later. A set of instructions constituting the program is executed to execute a method corresponding to the program. An example of the storage is a nonvolatile memory. Note that the program stored in the storage can be updated through a communication network such as internet, for example, such as over-the-air (OTA).

The control unit 30 generates drive signals for turning on/off the switches SUp to SWn constituting the inverter 20. Particularly, the control unit 30 generates a drive signal for turning on/off each of the arm switches SUp to SWn and supplies the generated drive signal to the gate of each of the arm switches SUp to SWn, in order to convert DC power output from the DC power source 10 into AC power and supply the AC power to each of the U,V,W-phase winding wires 52U, 52V, and 52W. This allows the upper arm switch and the lower arm switch to be alternately turned on with a dead time in each phase.

The control unit 30 turns on/off the switches SUp to SWn to cause a combined current of a fundamental current and a harmonic current (specifically, a harmonic exciting current) having a frequency higher than the fundamental current to flow through the phase winding wires 52U, 52V, and 52W, respectively. The fundamental current is a current mainly intended to generate torque in the rotary electric machine 40. The harmonic current is a current mainly intended to excite the field winding 70 and induce a field current in the field winding 70. The phase currents flowing through the phase winding wires 52U, 52V, and 52W are shifted by an electrical angle of 120°.

Using Fig. 5, torque control of the rotary electric machine 40 executed by the control unit 30 will be described.

A two-phase conversion section 100 converts U,V,W-phase currents in a three-phase fixed coordinate system into a d-axis current Idr and a q-axis current Iqr in a two-phase rotating coordinate system (dq coordinate system), based on a detected value of the current sensor 21 and an electrical angle $\theta e$ detected by the angle sensor 22.

A command current calculation section 101 calculates a d-axis fundamental command current Idbref and a q-axis command current Iqref based on command torque Tref. The d-axis fundamental command current Idbref and the q-axis command current Iqref are a command value of a DC component corresponding to the fundamental current. The command current calculation section 101 only has to calculate the d-axis fundamental command current Idbref and the q-axis command current Iqref based on, for example, map information associating the command torque Tref, the d-axis fundamental command current Idbref, and the q-axis command current Iqref with one another, and the input command torque Tref.

An exciting current calculation section 102 calculates a d-axis high-frequency command current Idhref. The d-axis high-frequency command current Idhref is a command value of an AC component corresponding to a harmonic current for exciting the field winding 70 and represented by formula (eq1) below in the present embodiment. In formula (eq1) below, Idamp is the amplitude of the d-axis high-frequency command current Idhref, and fh is the variable frequency of the d-axis high-frequency command current Idhref.

[Math. 1]

$$I_{dhref} = I_{damp} \cdot sin\ (2\pi \cdot f_h \cdot t) \quad \cdots (eq1)$$

The exciting current calculation section 102 calculates the d-axis high-frequency command current Idhref based on a field current If calculated by a later-described field current calculation section 115, an electrical angle speed $\omega e$ of the rotor 60 calculated by a later-described speed calculation section 110, and a voltage (hereinafter, a power source voltage Vdc) of the DC power source 10 detected by the voltage sensor 23. Note that the exciting current calculation section 102 only has to calculate an amplitude Idamp of the d-axis high-frequency command current Idhref such that the amplitude of the above-described harmonic current is 3% or more of the amplitude of the fundamental current.

A superimposition section 103 calculates a d-axis command current Idref by adding the d-axis high-frequency command current Idhref to the d-axis fundamental command current Idbref.

A d-axis deviation calculation section 104 calculates a d-axis current deviation $\Delta$Id by subtracting the d-axis current Idr from the d-axis command current Idref. A q-axis deviation calculation section 105 calculates a q-axis current deviation $\Delta$Iq by subtracting the q-axis current Iqr from the q-axis command current Iqref.

A d-axis current control section 106 calculates a d-axis voltage command value Vdref as a manipulated variable for feedback-controlling the d-axis current Idr to the d-axis command current Idref based on the d-axis current deviation $\Delta$Id. A q-axis current control section 107 calculates a q-axis voltage command value Vqref as a manipulated variable for feedback-controlling the q-axis current Iqr to the q-axis command current Iqref based on the q-axis current deviation $\Delta$Iq. Note that in the present embodiment, the feedback control of each of the current control sections 106 and 107 is proportional-plus-integral control.

A three-phase conversion section 108 converts d,q-axis voltage command values Vdref and Vqref in a two-phase rotating coordinate system into U,V,W-phase voltage command values VUref, VVref, and VWref in a three-phase fixed coordinate system based on the d,q-axis voltage command values Vdref and Vqref and the electrical angles θe. The U,V,W-phase voltage command values VUref, VVref, and VWref form a waveform in which phases are shifted by an electrical angle of 120 degrees. The frequency of a harmonic component contained in the U,V,W-phase voltage command values VUref, VVref, and VWref is set to a frequency near the above-described first resonance frequency f1.

A signal generation section 109 generates drive signals of U,V,W-phase upper and lower arm switches SUp to SWn by PWM modulation based on the U,V,W-phase voltage command values VUref, VVref, and VWref, the power source voltage Vdc, and a carrier signal (for example, a triangle wave signal). The generated drive signals are input to the gates of the switches. Accordingly, the switching control of the inverter 20 is executed. Note that in the present embodiment, the signal generation section 109 is equivalent to the "switch control section".

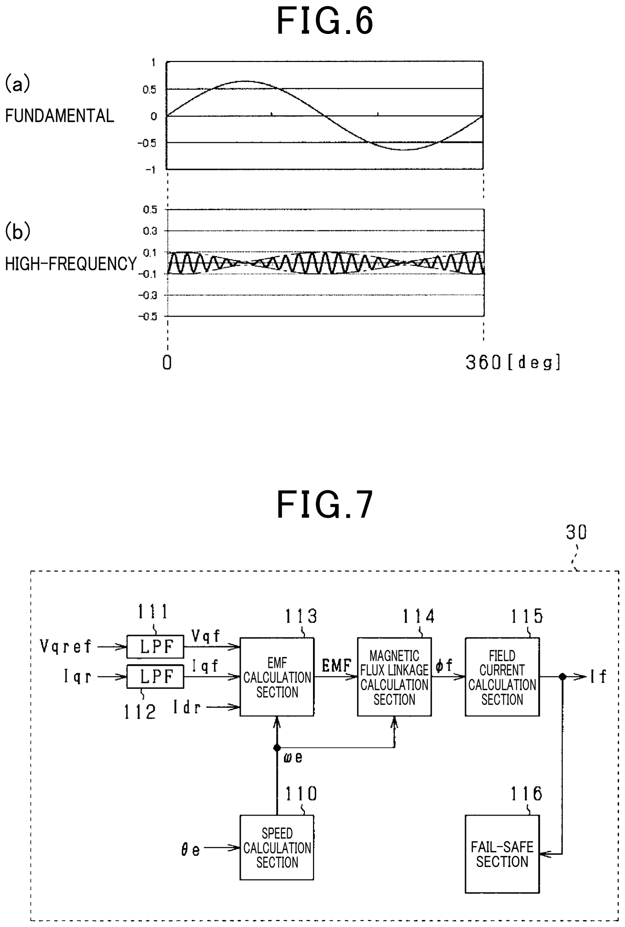

When the switching control of the inverter 20 is performed, a combined current in which a harmonic current (see solid line in Fig. 6(b)) is superimposed on a fundamental current (see Fig. 6(a)) flows through the phase winding wires 52U, 52V, and 52W. Here, Fig. 6(a) shows a change of a fundamental current in one electrical angle period. The dot-dashed line of Fig. 6(b) indicates an envelope of a harmonic current. The envelope of a harmonic current has the same period as a fundamental current. The value along the vertical axis shown in Fig. 6 indicates a relative relationship in size of the waveforms shown in Figs. 6(a) and 6(b).

The harmonic current flowing through the stator winding 52 causes a field current to flow through the field winding 70. In the present embodiment, the control unit 30 calculates the field current If flowing through the field winding. Hereinafter, the calculation method will be described using Fig. 7.

In the control unit 30, a speed calculation section 110 calculates an electrical angle speed ωe based on a detected electrical angle θe.

A first low-pass filter 111 calculates a post-filtering q-axis voltage Vqf by performing low-pass filter processing to the q-axis voltage command value Vqref calculated by the q-axis current control section 107. A second low-pass filter 112 calculates a post-filtering q-axis current Iqf by performing low-pass filter processing to the q-axis current Iqr calculated by the two-phase conversion section 100.

In the present embodiment, the field current If is calculated based on a voltage equation of a motor in a two-phase rotating coordinate system. The voltage equation is shown in formulae (eq2) and (eq3) below. In formulae (eq2) and (eq3) below, R is the resistance value of the stator winding 52, Ld and Lq are d,q-axis inductances, and φ is the effective value of the magnetic flux linkage of the stator winding 52. Low-pass filter processing is performed for eliminating the effect of the time derivative value of the q-axis current Iq in the second term on the righthand side in formula (eq3) below.

[Math. 2]

$$V_d = R{\cdot}I_d + L_d{\cdot}\ d/dt\ I_d - \omega_e\ {\cdot}L_q{\cdot}\ I_q \cdots (eq2)$$

[Math. 3]

$$V_q = R{\cdot}I_q + L_q{\cdot}\ d/dt\ I_q + \omega_e\ {\cdot}L_d\ {\cdot}\ I_d + \omega_e\ {\cdot}\ \varphi \cdots (eq3)$$

An induced voltage calculation section 113 calculates an induced voltage EMF based on the post-filtering q-axis voltage Vqf, the post-filtering q-axis current Iqf, the electrical angle speed ωe calculated by the speed calculation section 110, and the d-axis current Idr calculated by the two-phase conversion section 100. Particularly, the induced voltage calculation section 113 calculates the induced voltage EMF based on formula (eq4) below.

[Math. 4]

$$EMF = V_{qf} - R\ {\cdot}I_{qf} - \omega_e\ {\cdot}L_d\ {\cdot}\ I_{dr} \cdots (eq4)$$

Note that the induced voltage calculation section 113 may calculate a d-axis inductance Ld used in formula (eq4) above based on, for example, map information of the d-axis inductance Ld associated with the post-filtering q-axis current Iqf and the d-axis current Idr. This is because the d-axis inductance Ld has current dependency. Further, since the above-described resistance value R also has temperature dependency, the induced voltage calculation section 113 may calculate the resistance value R by using map information corresponding to the integrated value of the detected value of the current sensor 21, the temperature of the rotor 60, and the like.

When the q-axis voltage command value Vqref, which is not a detected value but is a command value, is used for calculating the induced voltage EMF, the induced voltage EMF can be calculated while suppressing the effect of the voltage variation associated with PWM modulation.

A magnetic flux linkage calculation section 114 calculates the magnetic flux linkage (hereinafter, field magnetic flux linkage φf) of the field winding 70 based on the calculated induced voltage EMF and the electrical angle speed ωe. Particularly, the magnetic flux linkage calculation section 114 calculates the field magnetic flux linkage φf based on formula (eq5) below.

[Math. 5]

$$\varphi_f = EMF / \omega_e \cdots (eq5)$$

The field current calculation section 115 calculates a field current If based on the calculated field magnetic flux linkage φf Particularly, the field current calculation section 115 calculates a field current If based on formula (eq6) below. In formula (eq6) below, Lf (>0) is a coupling inductance and is also an inductance of a d-axis magnetic path including the back yoke 51a and the teeth 51b of the stator 50 as well as the rotor core 61 and the main pole portions 62 of the rotor 60.

[Math. 6]

$$I_f = \varphi_f / L_f \cdots (eq6)$$

Note that the field current calculation section 115 may calculate the coupling inductance Lf used in formula (eq6) above based on, for example, map information of the coupling inductance Lf associated with the d-axis current Idr and the post-filtering q-axis current Iqf. This is because the coupling inductance Lf has current dependency.

The calculated field current If is input to the exciting current calculation section 102. The exciting current calculation section 102 adjusts the amplitude Idamp such that the excess or deficiency of the obtained field current If relative to the command value of a field current corresponding to the amplitude Idamp of the d-axis high-frequency command current Idhref is closer to 0.

A fail-safe section 116 performs temperature estimation processing of calculating the temperature of the rotor 60 based on the calculated field current If and the resistance value of the field winding 70. The fail-safe section 116 performs output suppression processing. The output suppression processing contains processing of outputting a command to reduce the amplitude Idamp to the exciting current calculation section 102 when it is determined that the calculated temperature of the rotor 60 exceeded a temperature threshold. This reduces the field current If and suppresses generated heat of the rotor 60. The fail-safe section 116 performs fail-safe processing. The fail-safe processing contains processing of outputting a command to reduce the amplitude Idamp when it is determined that the calculated field current If exceeded a current threshold. This allows for evacuating to a safe state when the rotor 60 is abnormal.

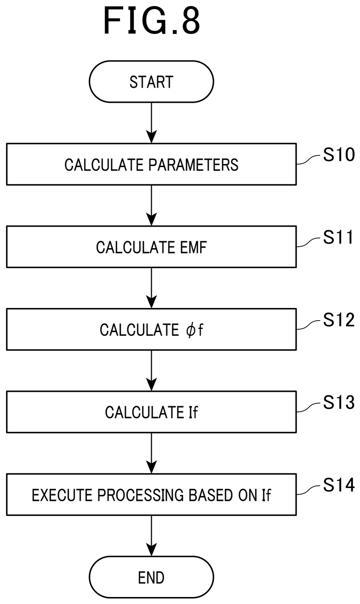

A flowchart of field current calculation processing executed by the control unit 30 is shown in Fig. 8. This processing is, for example, repeated at predetermined control cycles.

In step S10, the post-filtering q-axis voltage Vqf is calculated in the first low-pass filter 111, the post-filtering q-axis current Iqf is calculated in the second low-pass filter 112, the electrical angle speed ωe is calculated in the speed calculation section 110, and the d-axis current Idr is calculated in the two-phase conversion section 100.

In step S11, the induced voltage EMF is calculated based on the calculated post-filtering q-axis voltage Vqf, post-filtering q-axis current Iqf, electrical angle speed ωe, and d-axis current Idr, in the induced voltage calculation section 113.

In step S12, the field magnetic flux linkage φf is calculated based on the calculated induced voltage EMF in the magnetic flux linkage calculation section 114.

In step S13, the field current If is calculated based on the calculated field magnetic flux linkage φf in the field current calculation section 115.

In step S14, processing based on the calculated field current If is performed. Specifically, for example, the above-described temperature estimation processing is performed, and if necessary, the above-described output suppression processing and fail-safe processing are performed.

According to the above-detailed present embodiment, the field current can be determined in a system without including a field energizing circuit and a brush, without including a field current sensor that detects a field current. This can reduce constituent components of the system and simplify the system.

<Modified example of first embodiment>

· The parameter input to the induced voltage calculation section 113 may be the q-axis command current Iqref and the d-axis command current Idref in place of the post-filtering q-axis current Iqf and the d-axis current Idr. Further, the d-axis current Idr input to the induced voltage calculation section 113 may be the d-axis current Idr from which a high-frequency component is removed through a low-pass filter.

· The induced voltage calculation section 113 may calculate the induced voltage EMF based on the q-axis voltage command value Vqref and the q-axis current Iqr which are not subjected to low-pass filter processing, in place of the post-filtering q-axis voltage Vqf and the post-filtering q-axis current Iqf. In this case, the induced voltage calculation section 113 only has to calculate the induced voltage EMF based on "EMF = Vqref - R × Iqr - Lq × d/dT(Iq) - ωe × Ld × Idr".

<Second embodiment>

Hereinafter, a second embodiment will be described mainly with differences from the first embodiment with reference to the drawings. In the present embodiment, the control unit 30 performs calculation processing of the field current If on a condition that it is determined that a specified condition has been established.

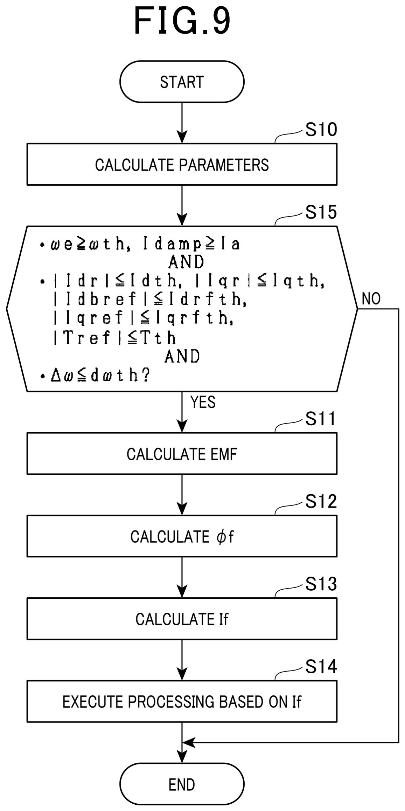

A flowchart of field current calculation processing executed by the control unit 30 is shown in Fig. 9. This processing is, for example, repeated at predetermined control cycles.

After completion of the processing of step S10, it is determined in step S15 whether or not a first condition, a second condition, and a third condition are established. The conditions are set in order to enhance the calculation accuracy of the field current If.

The first condition is a condition that the calculated electrical angle speed ωe is not less than a speed threshold ωth while the amplitude Idamp of the d-axis high-frequency command current Idhref is not less than an amplitude threshold Ia. The first condition is a condition for calculating a field current when the generated induced voltage is large.

The second condition is a condition that (A) the magnitude of the d-axis current Idr is not more than a d-axis current threshold Idth, (B) the magnitude of the q-axis current Iqr is not more than a q-axis current threshold Iqth, (C) the magnitude of the d-axis fundamental command current Idbref is not more than a d-axis command threshold Idrfth, (D) the magnitude of the q-axis command current Iqref is not more than a q-axis command threshold Iqrfth, and the magnitude of the command torque Tref is not more than a torque threshold Tth. The second condition is a condition for calculating a field current when the rotary electric machine 40 operates in a region where a voltage component other than the induced voltage is small. Note that the d-axis current Idr used in the above-described (A) of the second condition only has to be, for example, the d-axis current Idr from which a high-frequency component is removed through a low-pass filter.

The third condition is a condition that a variation amount Δω of the electrical angle speed ωe is not more than a prescribed value dωth. The third condition is a condition for calculating a field current when the operation of the rotary electric machine 40 is stable. Note that the variation amount Δω is, for example, a difference between the maximum value and the minimum value of the electrical angle speed ωe in one electrical angle period.

When it is determined in step S15 that all the first to third conditions have been established, the processing proceeds to step S11.

According to the above-described present embodiment, the calculation accuracy of the field current If can be enhanced.

<Modified example of second embodiment>

· The specified condition used in step S15 is not limited to all the first to third conditions and may be any one of the first to third conditions or any two of the first to third conditions.
· In step S15, conditions (C) to (E), for example, of the second condition may not be used.

<Third embodiment>

Hereinafter, a third embodiment will be described mainly with differences from the first embodiment with reference to the drawings. In the present embodiment, the calculation method of the field current If is changed.

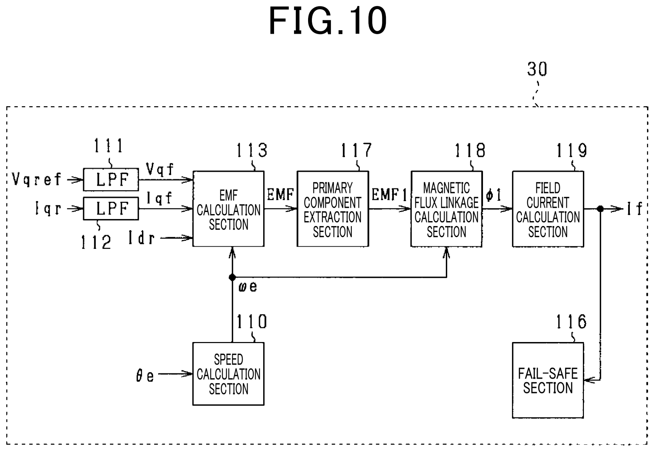

Fig. 10 is a block diagram of field current calculation processing and fail-safe processing executed by the control unit 30.

A primary component extraction section 117 extracts a primary component EMF1 contained in the induced voltage EMF based on the calculated induced voltage EMF calculated by the induced voltage calculation section 113. The primary component EMF1 is the component of the frequency fh of the d-axis high-frequency command current Idhref, contained in the induced voltage EMF. The primary component extraction section 117 extracts the primary component EMF1 using, for example, digital Fourier transform.

A magnetic flux linkage calculation section 118 calculates a magnetic flux primary component φ1 which is the primary component of the magnetic flux linkage of the field winding 70, based on the extracted primary component EMF1 and the electrical angle speed ωe. The magnetic flux primary component φ1 is the component of the frequency fh of the d-axis high-frequency command current Idhref, contained in the field magnetic flux linkage φf. The magnetic flux linkage calculation section 118 calculates the magnetic flux primary component φ1 based on formula (eq7) below.
[Math. 7]

$$\varphi_1 = EMF1 \, / \, \omega_e \cdots \, (eq7)$$

A field current calculation section 119 calculates the field current If based on the calculated magnetic flux primary component φ1. Particularly, the field current calculation section 119 calculates the field current If based on formula (eq8) below.
[Math. 8]

$$I_f = \varphi_1/k \, / \, L_f \cdots \, (eq8)$$

k is a proportionality coefficient indicating a relationship between the magnetic flux primary component φ1 and a DC component φ0 of the field magnetic flux linkage φf (for example, the effective value of the field magnetic flux linkage φf), and "φ1 = k × φ0".

Note that the field current calculation section 119 may calculate the field current If based on map information of the field current If associated with the magnetic flux primary component φ1.

According to the calculation method of the field current If based on the magnetic flux primary component φ1, the field current If can be calculated while suppressing the effect of R, Ld, and Lq of formula (eq3) above and the effect of a sixth harmonic caused by the dead time of the inverter 20 and the magnetic circuit of the rotary electric machine 40.

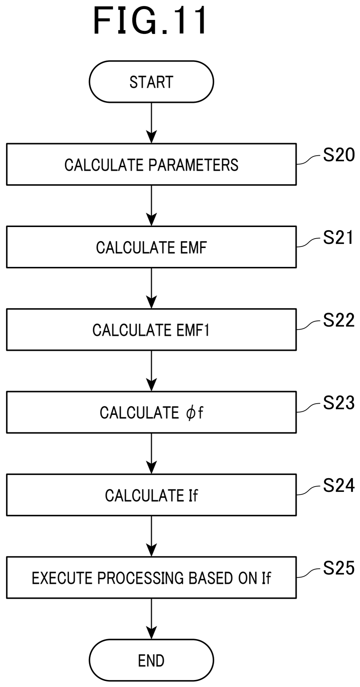

A flowchart of field current calculation processing executed by the control unit 30 is shown in Fig. 11. This processing is, for example, repeated at predetermined control cycles.

In step S20, the post-filtering q-axis voltage Vqf is calculated in the first low-pass filter 111, the post-filtering q-axis current Iqf is calculated in the second low-pass filter 112, the electrical angle speed ωe is calculated in the speed calculation section 110, and the d-axis current Idr is calculated in the two-phase conversion section 100.

In step S21, the induced voltage EMF is calculated in the induced voltage calculation section 113, based on the calculated post-filtering q-axis voltage Vqf, post-filtering q-axis current Iqf, electrical angle speed ωe, and d-axis current Idr.

In step S22, the primary component EMF1 is extracted in the primary component extraction section 117, based on the calculated induced voltage EMF.

In step S23, the magnetic flux primary component φ1 is calculated based on the extracted primary component EMF1 in the magnetic flux linkage calculation section 118.

In step S24, the field current If is calculated based on the calculated magnetic flux primary component φ1 in the field current calculation section 119.

In step S25, processing based on the calculated field current If is performed in the same manner as in step S14.

<Modified example of third embodiment>

The extraction section 117 may extract a secondary component EMF2 contained in the induced voltage EMF based on the induced voltage EMF calculated by the induced voltage calculation section 113. The secondary component EMF2 is the component of the "2 × fh" of the d-axis high-frequency command current Idhref, contained in the induced voltage EMF. The magnetic flux linkage calculation section 118 only has to calculate a magnetic flux secondary component φ2 based on the extracted secondary component EMF2, and the field current calculation section 119 only has to calculate the field current If based on the calculated magnetic flux secondary component φ2. The magnetic flux secondary component φ2 is the component of the "2 × fh" of the d-axis high-frequency command current Idhref, contained in the field magnetic flux linkage φf.

<Fourth embodiment>

Hereinafter, a fourth embodiment will be described mainly with differences from the first embodiment with reference to the drawings. In the present embodiment, the calculation method of the field current If is changed.

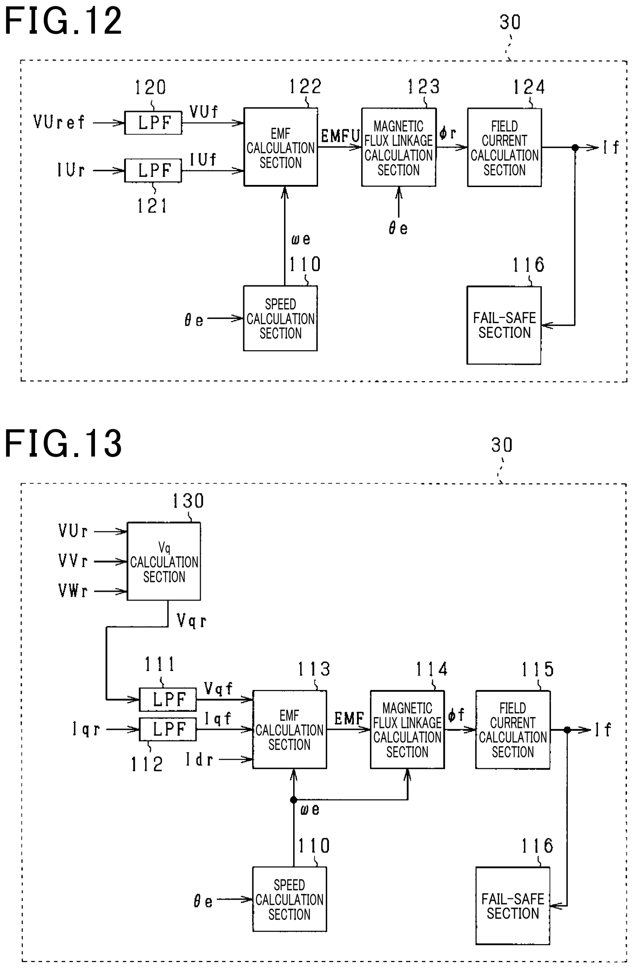

Fig. 12 is a block diagram of field current calculation processing and fail-safe processing executed by the control unit 30. Hereinafter, a case in which the parameter of the U phase is used for calculating the field current If will be described as an example.

A first low-pass filter 120 calculates a post-filtering U-phase voltage VUf by performing low-pass filter processing to the U-phase voltage command value VUref calculated by the three-phase conversion section 108. A second low-pass filter 121 calculates a post-filtering U-phase current IUf by performing low-pass filter processing to a U-phase current IUr detected by the current sensor 21.

In the present embodiment, the field current If is calculated based on formula (eq9) below which is a voltage equation of a three-phase fixed coordinate system. In formula (eq9) below, L is a self-inductance of each phase. Low-pass filter processing is performed for eliminating the effect of the time derivative value of the phase current in the second term on the righthand side in formula (eq9) below.

[Math. 9]

$$VU = R \cdot IU + L \cdot d/dt\ IU + \omega_e \cdot \varphi \cdot sin\theta_e$$

$$VV = R \cdot IV + L \cdot d/dt\ IV + \omega_e \cdot \varphi \cdot sin\ (\theta_e - 2/3\ \pi) \cdots (eq9)$$

$$VW = R \cdot IW + L \cdot d/dt\ IW + \omega_e \cdot \varphi \cdot sin\ (\theta_e + 2/3\pi)$$

An induced voltage calculation section 122 calculates a U-phase induced voltage EMFU based on the post-filtering U-phase voltage VUf, the post-filtering U-phase current IUf, and the electrical angle speed $\omega$e. Particularly, the induced voltage calculation section 122 calculates the U-phase induced voltage EMFU based on formula (eq10) below.

[Math. 10]

$$EMFU = VUf - R \cdot IUf \cdots (eq10)$$

A magnetic flux linkage calculation section 123 calculates the magnetic flux linkage (hereinafter, the field magnetic flux linkage $\varphi$r) of the field winding 70 based on the calculated U-phase induced voltage EMFU, electrical angle speed $\omega$e, and electrical angle $\theta$e. Particularly, the magnetic flux linkage calculation section 123 calculates the field magnetic flux linkage $\varphi$r based on formula (eq11) below.

[Math. 11]

$$\varphi_r = EMFU / \omega_e \cdot sin\theta_e \quad \cdots (eq11)$$

A field current calculation section 124 calculates the field current If based on the calculated field magnetic flux linkage $\varphi$r. Particularly, the field current calculation section 124 calculates the field current If based on formula (eq12) below.

[Math. 12]

$$If = \varphi_r / L_f \quad \cdots (eq12)$$

The field current If can also be calculated according to the above-described present embodiment.

<Modified example of fourth embodiment>

· The parameter input to the first low-pass filter 120 may be a U-phase voltage VUr detected by the voltage sensor 23 in place of the U-phase voltage command value VUref.

· The parameter input to the induced voltage calculation section 122 may be a U-phase current command value calculated based on the d,q-axis command currents Idref and Iqref and the electrical angle $\theta$e in place of the post-filtering U-phase current IUf.

· The control unit 30 may calculate an induced voltage based on the parameter of the V phase (V-phase voltage command value VVref, V-phase current IVr) or the parameter of the W phase (W-phase voltage command value VWref, W-phase current IWr) in place of the parameter of the U phase (U-phase voltage command value VUref, U-phase current IUr).

· In view of the fact that there is correlation between phase voltage and line voltage, the control unit 30 may calculate an induced voltage based on line voltage in place of phase voltage.

<Fifth embodiment>

Hereinafter, a fifth embodiment will be described mainly with differences from the first embodiment with reference to the drawings. In the present embodiment, the calculation method of the field current If is changed.

Fig. 13 is a block diagram of field current calculation processing and fail-safe processing executed by the control unit 30.

A q-axis voltage calculation section 130 calculates a q-axis voltage Vqr based on the U,V,W-phase voltages VUr, VVr, and VWr detected by the voltage sensor 23 and the electrical angle θe. Particularly, the q-axis voltage calculation section 130 calculates the q-axis voltage Vqr based on formula (eq13) below.

[Math. 13]

$$V_{qr} = -\sqrt{\frac{2}{3}} \left\{ VUr \times \sin\theta_e + VV_r \times \sin\left(\theta_e - \frac{2}{3}\pi\right) + VW_r \times \sin\left(\theta_e + \frac{2}{3}\pi\right) \right\} \cdots (eq13)$$

The q-axis voltage Vqr calculated by the q-axis voltage calculation section 130 is input to the first low-pass filter 111. The first low-pass filter 111 performs low-pass filter processing to the input q-axis voltage Vqr thereby to calculate the post-filtering q-axis voltage Vqf.

The field current If can also be calculated according to the above-described present embodiment.

<Sixth embodiment>

Hereinafter, a sixth embodiment will be described mainly with differences from the first embodiment with reference to the drawings. When the magnitude of the amplitude Idamp of the d-axis high-frequency command current Idhref is large in the present embodiment, the d,q-axis current control sections 106 and 107 change the feedback gain of the feedback control than when the magnitude of the amplitude Idamp is small. This change processing is processing in view of the fact that the inductance of the rotary electric machine 40 decreases when the amplitude Idamp is large.

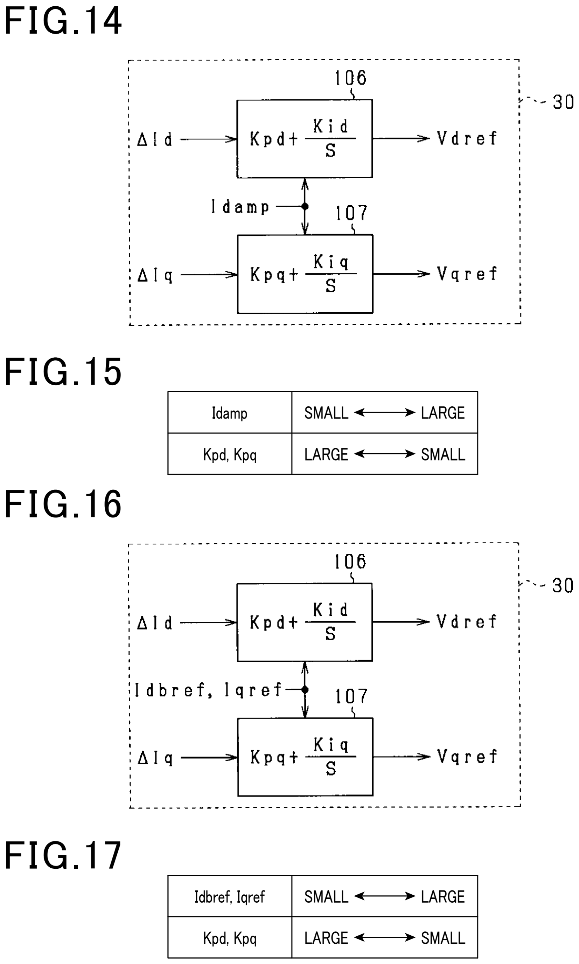

Particularly, as shown in Fig. 14 and Fig. 15, the d-axis current control section 106 increases an proportional gain Kpd and an integral gain Kid in proportional-plus-integral control as the amplitude Idamp increases. For example, the d-axis current control section 106 only has to stepwise or continuously increase a proportional gain Kpd and an integral gain Kid as the amplitude Idamp increases.

The q-axis current control section 107 increases a proportional gain Kpq and an integral gain Kiq in proportional-plus-integral control as the amplitude Idamp increases. For example, the q-axis current control section 107 only has to stepwise or continuously increase a proportional gain Kpq and an integral gain Kiq as the amplitude Idamp increases.

According to the above-described present embodiment, responsiveness of current control can be maintained at a high level even when a change in the magnitude of a current changes the inductance of the rotary electric machine 40.

<Seventh embodiment>

Hereinafter, a seventh embodiment will be described mainly with differences from the sixth embodiment with reference to the drawings. In the present embodiment, the d,q-axis current control sections 106 and 107 use the magnitude of the d-axis fundamental command current Idbref and the magnitude of the q-axis command current Iqref in place of the magnitude of the amplitude Idamp of the d-axis high-frequency command current Idhref.

Particularly, as shown in Fig. 16 and Fig. 17, the d-axis current control section 106 increases an proportional gain Kpd and an integral gain Kid in proportional-plus-integral control as the magnitude of the d-axis fundamental command current Idbref and the magnitude of the q-axis command current Iqref increase. The q-axis current control section 107 increases a proportional gain Kpq and an integral gain Kiq in proportional-plus-integral control as the magnitude of the d-axis fundamental command current Idbref and the magnitude of the q-axis command current Iqref increase.

According to the above-described present embodiment, responsiveness of current control can be maintained at a high level even when a change in the magnitude of a current changes the inductance of the rotary electric machine 40.

<Eighth embodiment>

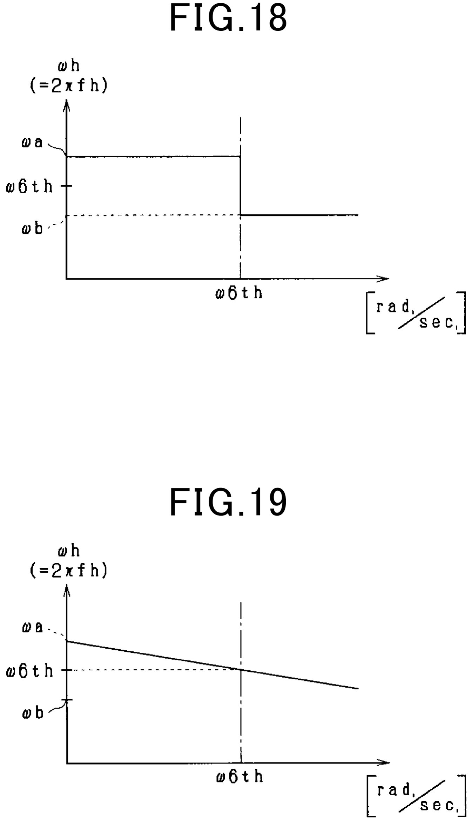

Hereinafter, an eighth embodiment will be described mainly with differences from the first embodiment with reference to the drawings. When the calculated electrical angle speed ωe is lower than a sixth electrical angle speed ω6th of the rotor 60 as shown in Fig. 18 in the present embodiment, the control unit 30 (equivalent to the "change section") sets the frequency fh of the d-axis high-frequency command current Idhref to a first prescribed frequency "ωa/(2π)" (for example, 2.4 kHz) which is higher than a frequency "ω6th/(2π)" (for example, 2.2 kHz) corresponding to the sixth electrical angle speed ω6th. Note that "ω6th = ωe × 6".

On the other hand, when the electrical angle speed ωe is not less than the sixth electrical angle speed ω6th, the control unit 30 sets the frequency fh of the d-axis high-frequency command current Idhref to a second prescribed frequency "ωb/(2π)" (for example, 2.0 kHz) which is lower than a frequency corresponding to the sixth electrical angle speed. The frequency range from the first prescribed frequency to the second prescribed frequency is a frequency range in which the frequency fh of the d-axis high-frequency command current Idhref can fall.

According to the above-described present embodiment, it is possible to prevent an electrical angle speed corresponding to the frequency fh of the d-axis high-frequency command current Idhref from coinciding with the sixth electrical angle speed ω6th and to improve the NV characteristics of the rotary electric machine 40.

<Ninth embodiment>

Hereinafter, a ninth embodiment will be described mainly with differences from the eighth embodiment with reference to the drawings. In the present embodiment, the control unit 30 sets the frequency th of the d-axis high-frequency command current Idhref to lower as the electrical angle speed ωe is higher, as shown in Fig. 19.

The control unit 30 sets the frequency fh of the d-axis high-frequency command current Idhref to the above-described first prescribed frequency "ωa/(2π)" when the electrical angle speed ωe is 0, and sets the frequency fh of the d-axis high-frequency command current Idhref to a frequency corresponding to the sixth electrical angle speed ω6th when the electrical angle speed ωe is the sixth electrical angle speed ω6th.

According to the above-described present embodiment, it is also possible to prevent an electrical angle speed corresponding to the frequency fh of the d-axis high-frequency command current Idhref from coinciding with the sixth electrical angle speed ω6th.

<Other embodiments>

Note that the above-described embodiments may be modified and implemented as follows.

· In the eighth and ninth embodiments, for example, a secondary, third, twelfth, or eighteenth electrical angle speed may be used in the processing of the control unit 30, in place of the sixth electrical angle speed ω6th.

· The high-frequency current (specifically, high-frequency exciting current) supplied to the stator winding 52 is not limited to a harmonic current having a variable frequency that is N times the frequency of the fundamental current (N is an integer of 2 or more) and may have a variable frequency that is outside N times the frequency of the fundamental current, as long as the variable frequency is higher than the frequency of the fundamental current.

· The second winding portion 71b may be disposed radially on the stator 50 side than the first winding portion 71a.

· The capacitor 81 constituting the resonance circuit may be electrically parallel-connected to the first winding portion 71a instead of the second winding portion 71b.

· The rotary electric machine is not limited to an inner rotor type rotary electric machine and may be an outer rotor type rotary electric machine. In this case, the main pole portion projects from the rotor core toward the radial inside.

· The rotary electric machine is not limited a star-connected rotary electric machine and may be a Δ-connected rotary electric machine.

· In the first embodiment, the stator core may be a stator core without including teeth.

· In the resonance circuit of the rotor 60, the capacitor 81 may not be included.

· The rotary electric machine is not limited to a rotary electric machine used as an on-board main machine and may be, for example, a rotary electric machine used as an integrated starter generator (ISG) which is an electric motor and a generator.

· The movable body on which the control system is mounted is not limited to a vehicle and may be, for example, an aircraft or a ship. Further, the control system is not limited to a system to be mounted on a movable body and may be a stationary system.

· The control device and the method therefor according to the present disclosure may be achieved by a dedicated computer that is provided by constituting a processor and a memory programmed to execute one or more functions embodied by a computer program. Alternatively, the control device and the method therefor according to the present disclosure may be achieved by a dedicated computer provided by constituting a processor with one or more dedicated hardware logic circuits. Alternatively, the control device and the method therefor according to the present disclosure may be achieved by one or more dedicated computers constituted by a combination of a processor and a memory programmed to execute one or more functions and a processer constituted by one or more hardware logic circuits. The computer program may be stored as an instruction to be executed by a computer, in a computer-readable non-transitory tangible memory medium.

Hereinafter, characteristic configurations extracted from the above-described embodiments will be described.

[Configuration 1]

A control unit (30) of a rotary electric machine applied to a system, the system including:

a rotary electric machine (40) that has a stator (50) including a stator winding (52) and a rotor (60) including a field winding (70); and
an inverter (20) electrically connected to the stator winding, in which
the rotary electric machine is configured such that when a high-frequency current flows through the stator winding, a voltage is induced in the field winding, and a field current flows through the field winding,
the control unit including
a switch control section (109) that performs switching control of the inverter such that a combined current of the high-frequency current and a fundamental current having a frequency lower than the high-frequency current flows through the stator winding,
an induced voltage calculation section (113, 122) that calculates an induced voltage generated in the stator winding when switching control is performed by the switch control section and while the rotor rotates, and
a field current calculation section (115, 119, 124) that calculates a field current flowing through the field winding based on the calculated induced voltage.

[Configuration 2]

The control unit for a rotary electric machine according to Configuration 1,
in which the induced voltage calculation section calculates the induced voltage based on a current flowing through the stator winding and an applied voltage from the inverter to the stator winding.

[Configuration 3]

The control unit for a rotary electric machine according to Configuration 2, including a current control section (107) that calculates a voltage command value (Vqref, VUref) applied to the stator winding in order to control a current flowing through the stator winding to a command current (Idref, Iqref),
in which the induced voltage calculation section uses the calculated voltage command value, as an applied voltage to the stator winding.

[Configuration 4]

The control unit for a rotary electric machine according to Configuration 3, in which the system includes a current sensor (21) that detects a current flowing through the stator winding,

the control unit including a two-phase conversion section (100) that converts currents of the stator winding in a three-phase fixed coordinate system of the rotary electric machine into d,q-axis currents (Idr, Iqr) in a two-phase rotating coordinate system of the rotary electric machine, based on a detected value of the current sensor, in which
the current control section is a q-axis current control section (107) that calculates a q-axis voltage command value (Vqref) applied to the stator winding in order to control the converted q-axis current into a q-axis command current (Iqref),
the switch control section performs the switching control based on the calculated q-axis voltage command value, and
the induced voltage calculation section (113) calculates the induced voltage (EMF) based on the converted d,q-axis currents and the calculated q-axis voltage command value.

[Configuration 5]

The control unit for a rotary electric machine according to Configuration 4, including an extraction section (117) that extracts an AC component of the calculated induced voltage,
in which the field current calculation section calculates the field current based on the extracted AC component.

[Configuration 6]

The control unit for a rotary electric machine according to Configuration 5, including

a superimposition section (103) that calculates a d-axis command current (Idref) by superimposing a d-axis high-frequency command current (Idhref), which is an AC component, on a d-axis fundamental command current (Idbref), which is a DC component, and

a d-axis current control section (106) that calculates a d-axis voltage command value (Vdref) applied to the stator winding in order to control the converted d-axis current into the d-axis command current, in which

the switch control section performs the switching control based on the calculated d,q-axis voltage command values, and

the extraction section extracts, as an AC component of the induced voltage, an AC component of the induced voltage at a frequency of a primary component of the d-axis high-frequency command current.

[Configuration 7]

The control unit for a rotary electric machine according to Configuration 6, in which

the d-axis current control section calculates the d-axis voltage command value applied to the stator winding in order to feedback-control the converted d-axis current into the d-axis command current,

the q-axis current control section calculates the q-axis voltage command value applied to the stator winding in order to feedback-control the converted q-axis current into the q-axis command current, and

the d,q-axis current control sections change a feedback gain of the feedback control based on a magnitude of an amplitude of the d-axis high-frequency command current.

[Configuration 8]

The control unit for a rotary electric machine according to Configuration 6, in which

the d-axis current control section calculates the d-axis voltage command value applied to the stator winding in order to feedback-control the converted d-axis current into the d-axis command current,

the q-axis current control section calculates the q-axis voltage command value applied to the stator winding in order to feedback-control the converted q-axis current into the q-axis command current, and

the d,q-axis current control sections change a feedback gain of the feedback control based on a magnitude of an amplitude of the fundamental current.

[Configuration 9]

The control unit for a rotary electric machine according to any one of Configurations 6 to 8, in which the induced voltage calculation section calculates the induced voltage on a condition that an electrical angle speed of the rotor is not less than a speed threshold ($\omega$th) while an amplitude of the d-axis high-frequency command current is not less than an amplitude threshold (Ia).

[Configuration 10]

The control unit for a rotary electric machine according to any one of Configurations 1 to 9, in which the induced voltage calculation section calculates the induced voltage on a condition that a d-axis current flowing through the stator winding is not more than a d-axis current threshold (Idth) while a q-axis current flowing through the stator winding is not more than a q-axis current threshold (Iqth).

[Configuration 11]

The control unit for a rotary electric machine according to any one of Configurations 1 to 10, in which the induced voltage calculation section calculates the induced voltage on a condition that a variation amount of an electrical angle speed of the rotor is not more than a predetermined value.

[Configuration 12]

The control unit for a rotary electric machine according to Configuration 6, including a change section that changes a frequency of the d-axis high-frequency command current based on an electrical angle frequency of the rotor.

[Configuration 13]

The control unit for a rotary electric machine according to Configuration 12,

in which the change section
sets, when an electrical angle speed of the rotor is lower than a sixth electrical angle speed ($\omega$6th) of the rotor, a frequency (fh) of the d-axis high-frequency command current to a frequency ($\omega a/(2\pi)$) that is higher than a frequency corresponding to the sixth electrical angle speed, and
sets, when an electrical angle speed of the rotor is not less than the sixth electrical angle speed, a frequency of the d-axis high-frequency command current to a frequency ($\omega b/(2\pi)$) that is lower than a frequency corresponding to the sixth electrical angle speed.

[Configuration 14]

The control unit for a rotary electric machine according to any one of Configurations 1 to 13, in which

the rotor has a rotor core (61) and main pole portions (62) circumferentially disposed at predetermined intervals and radially projecting from the rotor core,
the field winding has a first winding portion (71a) and a second winding portion (71b) which are electrically series-connected,
the first winding portion and the second winding portion are wound around each of the main pole portions, and
the rotor has
a diode (80) electrically parallel-connected to a series-connected body of the first winding portion and the second winding portion, and
a capacitor (81) electrically parallel-connected to any one of the first winding portion and the second winding portion.

The present disclosure has been described in accordance with examples, but it is understood that the present disclosure should not be limited to the examples and configurations. The present disclosure encompasses various modified examples and modifications within equivalent ranges. In addition, various combinations and forms as well as other combinations and forms including one or more/less constituents thereto are also within the scope and spirit of the present disclosure.

**Claims**

1. A control unit (30) of a rotary electric machine applied to a system, the system including:

   a rotary electric machine (40) that has a stator (50) including a stator winding (52) and a rotor (60) including a field winding (70); and
   an inverter (20) electrically connected to the stator winding, wherein
   the rotary electric machine is configured such that when a high-frequency current flows through the stator winding, a voltage is induced in the field winding, and a field current flows through the field winding,
   the control unit comprising:

   a switch control section (109) that performs switching control of the inverter such that a combined current of the high-frequency current and a fundamental current having a frequency lower than the high-frequency current flows through the stator winding,
   an induced voltage calculation section (113, 122) that calculates an induced voltage generated in the stator winding when the switching control is performed by the switch control section and while the rotor rotates, and
   a field current calculation section (115, 119, 124) that calculates a field current flowing through the field winding based on the calculated induced voltage.

2. The control unit for a rotary electric machine according to claim 1,
   wherein the induced voltage calculation section calculates the induced voltage based on a current flowing through the stator winding and an applied voltage from the inverter to the stator winding.

3. The control unit for a rotary electric machine according to claim 2, comprising a current control section (107) that calculates a voltage command value (Vqref, VUref) applied to the stator winding in order to control a current flowing through the stator winding to a command current (Idref, Iqref),
wherein the induced voltage calculation section uses the calculated voltage command value, as an applied voltage to the stator winding.

4. The control unit for a rotary electric machine according to claim 3, in which the system includes a current sensor (21) that detects a current flowing through the stator winding,

the control unit comprising a two-phase conversion section (100) that converts currents of the stator winding in a three-phase fixed coordinate system of the rotary electric machine into d,q-axis currents (Idr, Iqr) in a two-phase rotating coordinate system of the rotary electric machine, based on a detected value of the current sensor, wherein
the current control section is a q-axis current control section (107) that calculates a q-axis voltage command value (Vqref) applied to the stator winding in order to control the converted q-axis current into a q-axis command current (Iqref),
the switch control section performs the switching control based on the calculated q-axis voltage command value, and
the induced voltage calculation section (113) calculates the induced voltage (EMF) based on the converted d,q-axis currents and the calculated q-axis voltage command value.

5. The control unit for a rotary electric machine according to claim 4, comprising an extraction section (117) that extracts an AC component of the calculated induced voltage,
wherein the field current calculation section calculates the field current based on the extracted AC component.

6. The control unit for a rotary electric machine according to claim 5, comprising

a superimposition section (103) that calculates a d-axis command current (Idref) by superimposing a d-axis high-frequency command current (Idhref), which is an AC component, on a d-axis fundamental command current (Idbref), which is a DC component, and
a d-axis current control section (106) that calculates a d-axis voltage command value (Vdref) applied to the stator winding in order to control the converted d-axis current into the d-axis command current, wherein
the switch control section performs the switching control based on the calculated d,q-axis voltage command values, and
the extraction section extracts, as an AC component of the induced voltage, an AC component of the induced voltage at a frequency of a primary component of the d-axis high-frequency command current.

7. The control unit for a rotary electric machine according to claim 6, wherein

the d-axis current control section calculates the d-axis voltage command value applied to the stator winding in order to feedback-control the converted d-axis current into the d-axis command current,
the q-axis current control section calculates the q-axis voltage command value applied to the stator winding in order to feedback-control the converted q-axis current into the q-axis command current, and
the d,q-axis current control section changes a feedback gain of the feedback control based on a magnitude of an amplitude of the d-axis high-frequency command current.

8. The control unit for a rotary electric machine according to claim 6, wherein

the d-axis current control section calculates the d-axis voltage command value applied to the stator winding in order to feedback-control the converted d-axis current into the d-axis command current,
the q-axis current control section calculates the q-axis voltage command value applied to the stator winding in order to feedback-control the converted q-axis current into the q-axis command current, and
the d,q-axis current control sections change a feedback gain of the feedback control based on a magnitude of an amplitude of the fundamental current.

9. The control unit for a rotary electric machine according to any one of claims 6 to 8, wherein the induced voltage calculation section calculates the induced voltage on a condition that an electrical angle speed of the rotor is not less than a speed threshold ($\omega$th) while an amplitude of the d-axis high-frequency command current is not less than an amplitude threshold (Ia).

10. The control unit for a rotary electric machine according to any one of claims 1 to 5, wherein the induced voltage calculation section calculates the induced voltage on a condition that a d-axis current flowing through the stator winding is not more than a d-axis current threshold (Idth) while a q-axis current flowing through the stator winding is not more than a q-axis current threshold (Iqth).

11. The control unit for a rotary electric machine according to any one of claims 1 to 5, wherein the induced voltage calculation section calculates the induced voltage on a condition that a variation amount of an electrical angle speed of the rotor is not more than a predetermined value.

12. The control unit for a rotary electric machine according to claim 6, comprising a change section that changes a frequency of the d-axis high-frequency command current based on an electrical angle frequency of the rotor.

13. The control unit for a rotary electric machine according to claim 12,

   wherein the change section
   sets, when an electrical angle speed of the rotor is lower than a sixth electrical angle speed ($\omega$6th) of the rotor, a frequency (fh) of the d-axis high-frequency command current to a frequency ($\omega a/(2\pi)$) that is higher than a frequency corresponding to the sixth electrical angle speed, and
   sets, when an electrical angle speed of the rotor is not less than the sixth electrical angle speed, a frequency of the d-axis high-frequency command current to a frequency ($\omega b/(2\pi)$) that is lower than a frequency corresponding to the sixth electrical angle speed.

14. The control unit for a rotary electric machine according to any one of claims 1 to 8, 12, and 13, wherein

   the rotor has a rotor core (61) and main pole portions (62) circumferentially disposed at predetermined intervals and radially projecting from the rotor core,
   the field winding has a first winding portion (71a) and a second winding portion (71b) which are electrically series-connected,
   the first winding portion and the second winding portion are wound around each of the main pole portions, and
   the rotor has
   a diode (80) electrically parallel-connected to a series-connected body of the first winding portion and the second winding portion and
   a capacitor (81) electrically parallel-connected to any one of the first winding portion and the second winding portion.

15. A program applied to a system, the system comprising:

   a rotary electric machine (40) that has a stator (50) including a stator winding (52) and a rotor (60) including a field winding (70);
   an inverter (20) electrically connected to the stator winding; and
   a computer (31), wherein
   the rotary electric machine is configured such that when a high-frequency current flows through the stator winding, a voltage is induced in the field winding, and a field current flows through the field winding, and
   the program causes the computer to execute
   processing of performing switching control of the inverter such that a combined current of the high-frequency current and a fundamental current having a frequency lower than the high-frequency current flows through the stator winding,
   processing of calculating an induced voltage generated in the stator winding when the switching control is performed and while the rotor rotates, and
   processing of calculating a field current flowing through the field winding based on the calculated induced voltage.

# FIG.1

# FIG.2

# FIG.3

# FIG.4

$$f1 = \frac{1}{2\pi\sqrt{L1 \times C}}$$

$$f2 = \frac{1}{2\pi\sqrt{L2 \times C}}$$

# FIG.5

# FIG.6

(a)
FUNDAMENTAL

(b)
HIGH-FREQUENCY

$0$          $360[\mathrm{deg}]$

# FIG.7

30

# FIG.8

START

↓

| CALCULATE PARAMETERS | S10 |

↓

| CALCULATE EMF | S11 |

↓

| CALCULATE $\phi f$ | S12 |

↓

| CALCULATE If | S13 |

↓

| EXECUTE PROCESSING BASED ON If | S14 |

↓

END

# FIG.9

START

↓

S10

CALCULATE PARAMETERS

↓

S15

- $\omega e \geqq \omega th$, Idamp$\geqq$Ia

  AND
- $|Idr|\leqq Idth$, $|Iqr|\leqq Iqth$,
  $|Idbref|\leqq Idrfth$,
  $|Iqref|\leqq Iqrfth$,
  $|Tref|\leqq Tth$

  AND
- $\Delta\omega\leqq d\omega th$?

NO →

YES ↓

S11

CALCULATE EMF

↓

S12

CALCULATE $\phi f$

↓

S13

CALCULATE If

↓

S14

EXECUTE PROCESSING BASED ON If

↓

END

# FIG.10

# FIG.11

START

CALCULATE PARAMETERS — S20

CALCULATE EMF — S21

CALCULATE EMF1 — S22

CALCULATE $\phi$f — S23

CALCULATE If — S24

EXECUTE PROCESSING BASED ON If — S25

END

# FIG.12

# FIG.13

## FIG.14

## FIG.15

| Idamp | SMALL ←——→ LARGE |
|---|---|
| Kpd, Kpq | LARGE ←——→ SMALL |

## FIG.16

## FIG.17

| Idbref, Iqref | SMALL ←——→ LARGE |
|---|---|
| Kpd, Kpq | LARGE ←——→ SMALL |

# FIG.18

# FIG.19

## INTERNATIONAL SEARCH REPORT

| International application No. |
| --- |
| **PCT/JP2024/022184** |

| A. | CLASSIFICATION OF SUBJECT MATTER |
| --- | --- |

*H02P 25/03*(2016.01)i
FI:   H02P25/03

According to International Patent Classification (IPC) or to both national classification and IPC

| B. | FIELDS SEARCHED |
| --- | --- |

Minimum documentation searched (classification system followed by classification symbols)

H02P25/03

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2007-185082 A (DENSO CORPORATION) 19 July 2007 (2007-07-19) paragraphs [0001]-[0122], fig. 1-36 | 1-15 |
| A | JP 2009-77464 A (DENSO CORPORATION) 09 April 2009 (2009-04-09) paragraphs [0001]-[0105], fig. 1-34 | 1-15 |
| A | JP 2013-197275 A (DENSO CORPORATION) 30 September 2013 (2013-09-30) paragraphs [0001]-[0024], fig. 1-12 | 1-15 |
| A | JP 2010-166787 A (ASMO CO., LTD.) 29 July 2010 (2010-07-29) paragraphs [0001]-[0036], fig. 1-3 | 1-15 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 August 2024** | **10 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/022184**

| Patent document cited in search report | | | Publication date (day/month/year) | Patent family member(s) | | | Publication date (day/month/year) |
|---|---|---|---|---|---|---|---|
| JP | 2007-185082 | A | 19 July 2007 | US | 2006/0290316 | A1 | |
| | | | | paragraphs [0001]-[0168], fig. 1-36 | | | |
| | | | | DE | 102006029459 | A1 | |
| | | | | CN | 1933298 | A | |
| JP | 2009-77464 | A | 09 April 2009 | US | 2009/0072777 | A1 | |
| | | | | paragraphs [0001]-[0175], fig. 1-34 | | | |
| JP | 2013-197275 | A | 30 September 2013 | (Family: none) | | | |
| JP | 2010-166787 | A | 29 July 2010 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023115389 A

- JP 2019071733 A